# EUROPÄISCHE PATENTSCHRIFT

(11) **EP 2 865 823 B1**
(45) Veröffentlichungstag und Bekanntmachung des Hinweises auf die Patenterteilung: **03.08.2016**
(21) Anmeldenummer: 14184622.0
(22) Anmeldetag: 12.09.2014
(51) Int. Cl.: E04B 1/76

(54) **Befestigungssystem**
Fastening system
Système de fixation

(30) Priorität: 24.10.2013 DE 102013111698
(43) Veröffentlichungstag der Anmeldung: 29.04.2015
(73) Patentinhaber: Klimas Sp.z.o.o., 42-233 Mykanow (PL)
(72) Erfinder: Klimas, Wojciecm, 42-233 Mykanów (PL)
(74) Vertreter: Herrmann, Jochen

(56) Entgegenhaltungen:
- EP-B1- 2 049 745
- Wkret-Met Fix Plug: "Wkret-Met Fix Plug", , 22. August 2013 (2013-08-22), XP054975762, Gefunden im Internet: URL:https://www.youtube.com/watch?v=Lfpt5q MIkD0 [gefunden am 2015-03-04]

## Beschreibung

Die Erfindung betrifft ein Befestigungssystem zur Montage von Dämmstoffelementen, insbesondere Dämmstoffplatten, aufweisend einen Spreiznagel und einen Dübel, wobei der Spreiznagel einen Spreiznagelkopf und einen Spreiznagelschaft aufweist, wobei der Dübel einen Dübelschaft und ein daran angeschlossenes Druckstück auf weist.

Ein derartiges Befestigungssystem geht aus einem Video der Intemetpräsenz "Y-outube" (https://www.youtube.com/watch?v=Lfpt5qMIkD0), eingestellt 22. August 2013 unter der Bezeichnung "Wkret-Met Fix Plug", hervor. Bei dem gezeigten Befestigungssystem ist ein Druckstück über ein auffächerbares Koppelstück mit einzelnen Fächerelementen jeweils über punktuelle Verbindungsabschnitte einstückig mit dem Dübelschaft verbunden. Bei Eindrücken des Druckstücks reißen die einzelnen Verbindungsabschnitte ab und bei Überschieben über die Gleitzone fächern sich die einzelnen Fächerelemente zu einem sich vergrößernden Durchmesser des Koppelstücks auf.

Aus der EP 2 049 745 B1 ist ebenfalls ein solches Befestigungssystem gemäß dem Oberbegriff des Anspruchs 1 bekannt. Zur Isolation von Bauwerken werden außenseitig auf das Mauerwerk Dämmstoffelemente aufgebracht. Um diese zusätzlich zu fixieren, werden durch die Dämmstoffelemente in das Mauerwerk hinein Bohrungen eingebracht. In diese Bohrungen lassen sich die vorbeschriebenen Dübel einstecken. Dabei stützt sich der Dübel mit seinem Druckstück auf der Außenseite der Dämmstoffplatte ab. Das freie Ende des Dübels ist in das Mauerwerk eingeführt. Nun kann der Spreiznagel mittels eines Hammers in den Dübel eingeschlagen werden. Dabei gelangt der Spreiznagel in den Bereich der Spreizzone des Dübels und bewirkt so eine Verspannung im Mauerwerk. In diesem Zustand kommt der Spreiznagel mit seinem Spreiznagelkopf zunächst in Kontakt mit dem Druckstück. Wenn nun weitere Hammerschläge auf den Spreiznagelkopf aufgebracht werden, so reißt die Verbindung zwischen dem Druckstück und dem Dübelschaft an einer dafür vorgesehenen Sollbruchstelle ab. Gleichzeitig wird dabei der Druckteller in die Oberfläche des Dämmstoffmaterials eingedrückt um eine bevorzugt flächenbündige oder vertiefte Montage des Druckstücks zu erreichen. Der Dübel und der Spreiznagel sind vorzugsweise aus Kunststoff gefertigt. Bei den bekannten Befestigungssystemen muss die Eintreibkraft in den Spreiznagel, insbesondere dann, wenn die Verbindung zwischen dem Druckstück und dem Dabelschaft abgerissen ist, möglichst exakt axial eingebracht werden. Weiterhin sollte möglichst nicht randseitig auf das Druckstück geschlagen werden. Es besteht dann die Gefahr, dass sich das Druckstück der Dämmstoffplatte schrägstellt und keine exakte Montage durchgeführt wird. Diese Gefahr besteht insbesondere bei schwer zugänglichen oder unübersichtlichen Montagestellen.

Es ist Aufgabe der Erfindung, ein Befestigungssystem bereitzustellen, das eine verbesserte Montage ermöglicht.

Diese Aufgabe wird dadurch gelöst, dass das Druckstück mittels eines umlaufend ausgebildeten Verbindungselementes einteilig mit dem Dübelschaft verbunden ist, wobei das Verbindungselement dergestalt ist, dass es bei Einbringen des Spreiznagels in den Dübelschaft umlaufend abreißt. Bei einer solchen Verbindung zwischen Druckstück in und Dübelschaft ist sichergestellt, dass auch bei Einbringen einer exzentrischen Einschlagkraft, stets ein gleichmäßige Abreißen des Verbindungselementes bewirkt wird. Damit kann sich das Druckstück nicht mehr im Dämmstoffmaterial schräg stellen und es ist eine ordnungsgemäße Montage garantiert.

Darüber hinaus bildet die Abrisskannte auch noch die Möglichkeit, eine umfangseitige Führung des Druckstückes beim Verschieben gegenüber dem Dübelschaft zu bewirken, sodass auch hier einer Schrägstellung des Druckstückes entgegengewirkt wird.

Somit ergeben sich gegenüber den aus dem Stand der Technik bekannten Befestigungssystemen wesentliche Montagevorteile.

Gemäß einer bevorzugten Erfindungsvariante kann es vorgesehen sein, dass der Dübelschaft an seinem, dem Druckstück zugewandten Ende über einen Absatz in ein Dübelstück übergeht, dass das Dübelstück einen kleineren Querschnitt als der Dübelschaft aufweist, und dass im Bereich des Absatzes das Verbindungselement angeordnet ist. Auf diese Weise kann mit einfachen Spritzgußwerkzeugen, ähnlich einem Filmscharnier, ein dünnwandiges Verbindungselement geschaffen werden. Zu diesem Zweck kann es auch vorgesehen sein, dass das Druckstück ein Koppelstück aufweist, das im Bereich seiner Innenkontur über das Verbindungselement an dem radial außen liegenden Bereich des Dübelschaftes angekoppelt ist, wobei das Koppelstück radial außen über den Dübelschaft im Anschlussbereich vorsteht. Auch bei dieser Lösung lässt sich ein dünnwandiges Verbindungselement einfach während des Spritzgießvorganges entformen. Darüber hinaus bietet diese Lösung auch eine stabile Führung der Abrisskannte des Druckstückes gegenüber dem Dübelschaft zum Zwecke der lagerrichtigen Ausrichtung des Druckstückes gegenüber dem Dübelschaft.

Eine besonders bevorzugte Erfindungsausgestaltung ist derart, dass das Druckstück so ausgebildet ist, dass es bei abgerissenem Verbindungselement mit seiner Abrisskannte über eine Gleitzone des Dübelschaftes gleitet, wobei sich die Gleitzone an die Abrisskannte des Dübelschaftes anschließt. Mit dieser Führung wird ein definierter Montagevorgang möglich.

Die Führung des Druckstückes gegenüber dem Dübelschaft wird noch zusätzlich verbessert, wenn vorgesehen ist, dass sich der Querschnitt der Gleitzone im Anschluss an die Abrisskannte kontinuierlich im Querschnitt vergrößert, insbesondere stumpfkegelförmig ausgebildet ist.

Eine verbesserte Krafteinleitung des Drucktellers in den Dübelschaft wird dadurch möglich, dass das Druckstück einen, insbesondere tellerförmigen Kopf aufweist, der an seiner Unterseite rippenförmig vorstehende Vorsprünge aufweist. Die rippenförmigen Vorsprünge steifen den Kopf aus, sodass keine unzulässig große Verformung des Kopfes beim Einschlagen entsteht. Somit ist auch mit dieser Maßnahme einer Beschädigung und Schrägstellung des Druckstückes entgegengewirkt.

Gemäß einer denkbaren Erfindungsalternative kann es vorgesehen sein, dass der tellerförmige Kopf des Druckstücks mit einem oder mehreren Durchbrüchen versehen ist. Während des Eindrückens des Druckstückes in das Dämmstoffmaterial kann dann Dämmstoff durch die Durchbrüche hindurchtreten, was den Eindringwiderstand reduziert. Zudem wird mit den Durchbrüchen und/oder Ausnehmungen Werkstoff eingespart.

Ein erfindungsgemäßes Befestigungssystem kann auch derart sein, dass der Dübelschaft eine Spreizzone aufweist, dass im Bereich der Spreizzone Längsschlitze eingebracht sind, wobei wenigstens zwei der Längsschlitze in Richtung der Mittellängsachse des Dübelschaftes zueinander versetzt angeordnet sind, und dass im Bereich zwischen den Längsschlitzen ein oder mehrere Verformungsabschnitte angeordnet ist/sind. Mit dieser Maßnahme kann sich beim Einschlagen des Spreiznagels die Spreizzone erweitern, wobei sich der Verformungsabschnitt verbiegt und querstellt. Hierdurch kann mit geringem Kraftaufwand eine effektive Verformung der Spreizzone erreicht werden. Dieser Effekt wird insbesondere dadurch vorteilhaft erreicht, wenn vorgesehen ist, dass der oder die Verformungsabschnitte von Flächenbereichen des Dübelschaftes gebildet ist/sind, deren Erstreckungen in Richtung der Mittellängsachse des Dübelschaftes um ein mehrfaches größer ist als deren Dimensionierung in Umfangsrichtung des Dübelschaftes.

Die Erfindung wird im Folgenden anhand eines in den Zeichnungen dargestellten Ausführungsbeispiels erläutert. Es zeigen:
- Fig. 1: ein Befestigungssystem in perspektivischer Ansicht,
- Fig. 2: das Befestigungssystem gemäß Fig. 1 in Seitenansicht,
- Fig. 3: das Befestigungssystem gemäß den Fig. 1 und 2 im Montagezustand sowie in einer vorbereiteten Einschlagstellung und im Vertikalschnitt,
- Fig. 4: eine der Fig. 3 entnommene Teildarstellung, wobei sich das Befestigungssystem in der Endmontagestellung befindet,
- Fig. 5: eine weitere Variante einer Endmontagestellung des Befestigungssystems nach den Fig. 1 bis 3.

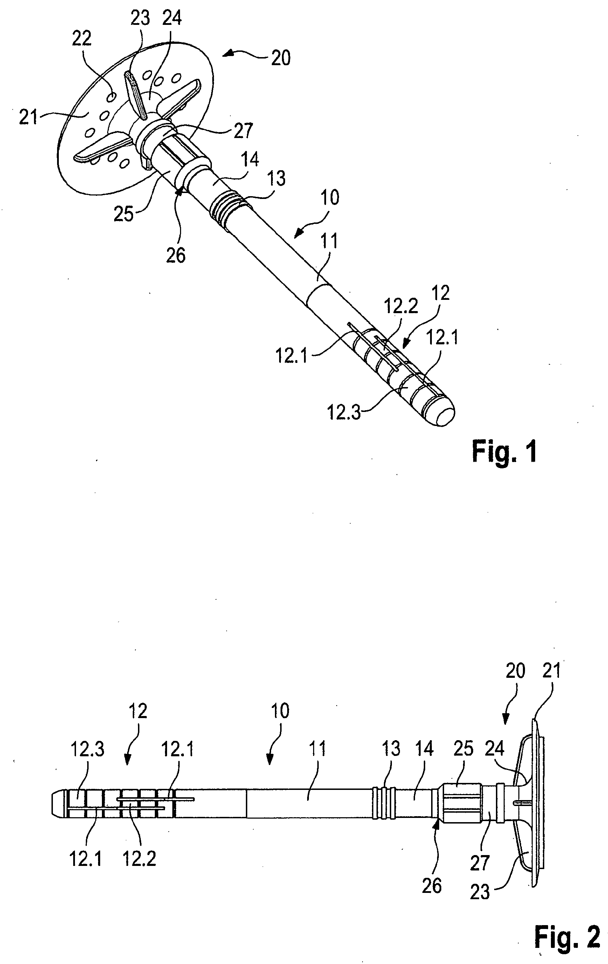

Fig. 1 zeigt einen Dübel 10 mit einem Dübelschaft 11. Der Dübelschaft 11 weist an seinem längsseitigen Ende eine Spreizzone 12 auf. Diese Spreizzone 12 umfasst vier Längsschlitze 12.1, wobei die Längsschlitze 12.1 einander paarweise zugeordnet sind und an diametral gegenüberliegenden Seiten des Dübelschaftes 11 vorhanden sind. Die jeweils einander paarweise zugeordneten Längsschlitze 12.1 sind in Richtung der Mittellängsachse des Dübelschaftes 11 zueinander versetzt angeordnet. Im Bereich zwischen den Längsschlitzen 12.1 sind Verformungsabschnitte 12.2 gebildet. Die Verformungsabschnitte 12.2 bilden einen Teil der Außenkontur des Dübelschaftes 11. Sie weisen eine Erstreckung in Richtung der Mittellängsachse des Dübelschaftes 11 auf, die um ein mehrfaches größer ist als die Erstreckung der Verformungsabschnitte 12.2 in Umfangsrichtung. Im Bereich der Spreizzone 12 ist der Dübelschaft 11 mit einer Verankerungskontur 12.3 ausgebildet. Diese kann in Form von Umfangsrillen und/oder Umfangsvorsprüngen ausgebildet sein.

Der Spreizzone 12 abgekehrt weist der Dübelschaft 11 einen Anschlag 13 auf, der von mehreren umlaufenden Vorsprüngen gebildet ist. Diese Vorsprünge 13 sind einteilig an dem Dübelschaft 11, welcher aus Kunststoff besteht, angespritzt. Im Anschluss an den Anschlag 13 bildet der Dübelschaft 11 eine Gleitzone 14. Diese ist stumpfkegelförmig ausgeführt und verjüngt sich ausgehend von dem Anschlag 13 in Richtung auf das freie Ende des Dübelschaftes 11 (in Fig. 2 von links nach rechts).

Mit dem Dübelschaft 11 ist ein Druckstück 20 einteilig verbunden. Das Druckstück 20 besitzt einen tellerartigen Kopf 21. In den Kopf 21 sind Durchbrüche 22 eingebracht. Auf der in Fig. 1 nicht erkennbaren Oberseite des Kopfes 21 sind zum Zwecke der Materialersparnis Ausnehmungen ausgenommen. Unterseitig sind am Kopf 21 Vorsprünge 23 angeformt. Diese sind rippenartig ausgebildet. Die Vorsprünge 23 sind weiterhin an einen Übergangsabschnitt 24 eines Koppelstückes 25 des Druckstückes 20 angeformt. Damit verbinden die Vorsprünge 23 den Kopf 21 mit dem Koppelstück 25. Sie steifen damit den Kopf 21 aus und verbessern die Anbindung des Kopfes 21 an das Koppelstück 25. Wie vorstehend erwähnt wurde, geht der Kopf 21 über den Übergangsabschnitt 24 einteilig in das Koppelstück 25 über. Der Übergangsabschnitt 24 bildet eine konkave Außenkontur, sodass eine spannungsoptimierte Konstruktion erreicht ist. Die konkave Außenkontur des Übergangsabschnittes 24 lässt sich in der Fig. 2 deutlich erkennen. Das Koppelstück 25 weist eine verdickte Kontur auf, und es geht an seinem dem Kopf 21 abgewandten Ende über eine stumpfkegelförmige Verjüngung in ein Verbindungselement 26 über. Mittels des Verbindungselementes 26 ist das ebenfalls aus Kunststoff bestehende Druckstück 20 einteilig an den Dübelschaft 11 angeformt. Mithin kann damit der Dübelschaft 11 mit dem Druckstück 20 in einer Kunststoff-Spritzgussform gefertigt werden.

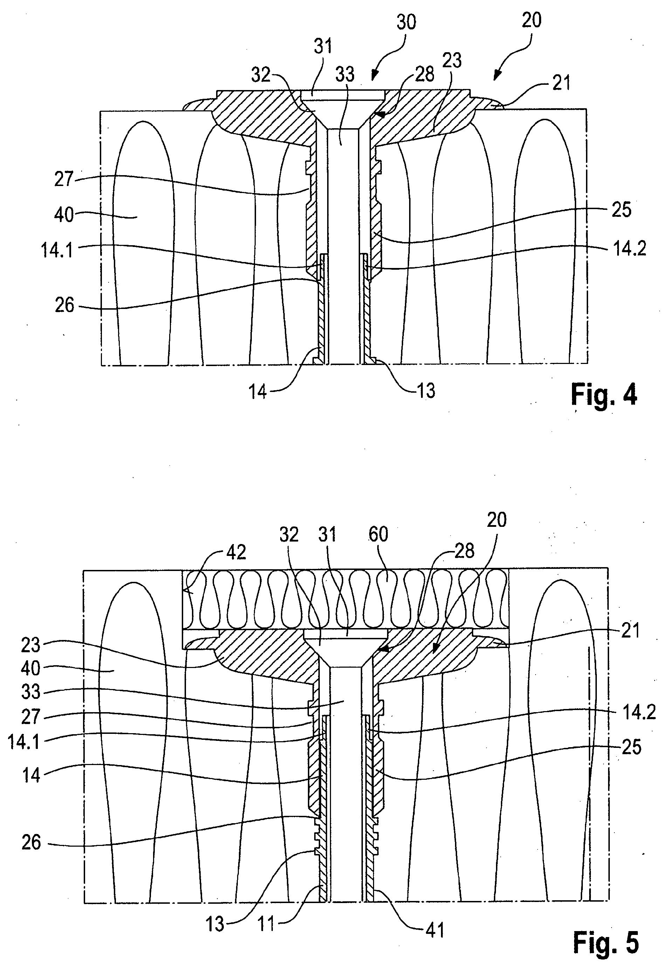

In Fig. 4 ist der Übergangsbereich zwischen dem Koppelstück 25 und dem Dübelschaft 11 näher erkennbar. Wie diese Darstellung zeigt, bildet der Dübelschaft 11 an seinem freien Ende einen Absatz 14.1. Dieser Absatz 14.1 geht in ein Dübetstück 14.2 über, das die Form eines Hohlzylinders aufweist. An der Kante des Absatzes 14.1 wird das Verbindungselement 26 in Form eines dünnwandigen Materialfilmes ausgebildet. Das Koppelstück 25 weist eine hohlzylindrische Form auf, wobei die Innenkontur des Koppelstückes 25 so gestaltet ist, dass nach Zerstörung des Verbindungselementes 26 das Koppelstück 25 auf die Gleitzone 14 aufgeschoben werden kann. Das Verbindungselement 26 ist als umlaufender Materialfilm ausgebildet. Im Bereich dieses umlaufenden Verbindungselementes 26 kann eine Trennebene des den Dübel 10 erzeugenden Werkzeuges angelegt sein. Damit lässt sich das Verbinddungselement 26 einfach und mit hoher Genauigkeit herstellen.

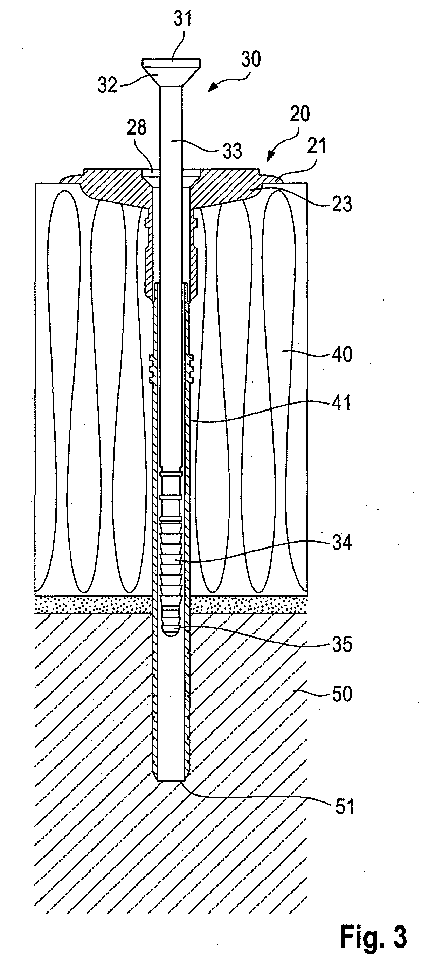

Wie Fig. 3 erkennen lässt, ist in den Dübel 10 ein Spreiznagel 30 eingeführt. Der Spreiznagel 30 weist einen Spreiznagelkopf 31 und einen Spreiznagelschaft 33 auf. Die Unterseite des Spreiznagelkopfes 31 ist in Form eines Außenkonuses 32 ausgebildet. In der in Fig. 3 gezeigten vorbereiteten Einschlagstellung ist der Spreiznagel 30 in den Dübel 10 eingeführt. Dabei ist der Spreiznagelschaft 33 durch eine Innenaufnahme des Dübelschaftes 11 geführt, die sich ausgehend von dem freien Ende der Spreizzone 12 bis durch das Dübelstück 14.2 erstreckt. Weiterhin durchdringt der Spreiznagelschaft 33 die von dem Koppelstück 25 gebildete Innenaufnahme. Der Spreiznagelschaft 33 ist im Bereich seines dem Spreiznagelkopf 31 abgekehrten Endes mit einem sich verjüngenden Endstück 35 ausgebildet und weist ein Verankerungsstück 34 auf. Das Verankerungsstück 34 kann umfangseitig vorstehende Verankerungselemente aufweisen.

Zur Montage des vorbeschriebenen Befestigungssystems wird zunächst eine Bohrung 41, 51 in ein Mauerwerk 50 und ein auf dieses aufgebrachtes Dämmstoffelement 40 eingebracht, wie dies Fig. 3 zeigt. Anschließend wird der Dübel 10 zusammen mit dem darin gehaltenen Spreiznagel in die Bohrung 41, 51 eingeschoben, bis der Kopf 21 auf der Außenseite des Dämmstoffelementes 40 zum Liegen kommt. In diesem Zustand ist die Spreizzone 12 in das Mauerwerk 50 eingeführt. Nun kann ein Schlag, beispielsweise mit einem Hammer auf den Spreiznagelkopf 31 aufgebracht werden. Hierdurch schiebt sich das Verankerungsstück 34 des Spreiznagels 30 in die Spreizzone 12. Dabei weiten sich die Längsschlitze 12.1 auf und der Verformungsabschnitt 12.2 stellt sich schräg. Beim Eintreiben des Spreiznagels 30 setzt sich der Spreiznagelkopf 31 mit seinem Außenkonus 32 in eine oberseitige Aufnahme des Kopfes 21 des Druckstückes 20. Die Aufnahme ist in Fig. 3 mit dem Bezugeszeichen 28 gekennzeichnet. Wenn nun der Spreiznagelkopf 32 an dem Kopf 21 des Druckstückes 20 anschlägt, so wird bei Aufbringen einer weiteren Eintreibkraft in den Spreiznagel 30 das Druckstück 20 axial in Richtung auf die Spreizzone 12 gegenüber dem Dübelschaft 11 verschoben. Hierbei reißt das Verbindungselement 26 umlaufend ab. Das Druckstück 20 kann dann im Bereich seiner Abrisskannte über die Gleitzone 14 in Richtung auf die Spreizzone 12 hin verstellt werden. Dabei drückt sich der Kopf 21 des Druckstückes 20 in die Oberfläche des Dämmstoffelementes 40 ein, bis er die in Fig. 4 gezeigte Position erreicht.

Denkbar ist jedoch auch eine versenkte Montage des Kopfes 21, wie dies Fig. 5 zeigt. Dabei wird zunächst eine Ausfräsung 42 in das Dämmstoffelement 40 eingebracht., dann wird der Kopf 21 soweit in das Dämmstoffelement 40 eingetrieben, bis ein ausreichend großer Abstandsraum zwischen der Oberfläche des Dämmstoffelementes 40 und der Oberseite des Kopfes 21 entsteht, der mit einem eingesetzten Isolierelement 60 abgedeckt werden kann.

## Patentansprüche

1. Befestigungssystem zur Montage von Dämmstoffelementen (40), aufweisend einen Spreiznagel (30) und einem Dübel (10),
wobei der Spreiznagel (30) einen Spreiznagelkopf (31) und einen Spreiznagelschaft (33) aufweist,
und wobei der Dübel (10) einen Dübelschaft (11) und ein daran angeschlossenes Druckstück (20) aufweist,
**dadurch gekennzeichnet,**
**dass** das Druckstück (20) mittels eines umlaufend ausgebildeten Verbindungselementes (26) einteilig mit dem Dübelschaft (11) verbunden ist,
wobei das Verbindungselement (26) dergestalt ist,
**dass** es bei Einbringen des Spreiznagels (30) in den Dübelschaft (11) umlaufend abreißt.

2. Befestigungssystem nach Anspruch 1,
**dadurch gekennzeichnet,**
**dass** der Dübelschaft (11) an seinem dem Druckstück (20) zugewandten Ende über einen Absatz (14.1) in ein Dübelstück (14.2) übergeht, dass das Dübelstück (14.2) einen kleineren Querschnitt als der Dübelschaft (11) aufweist, und dass im Bereich des Absatzes (14.1) das Verbindungselement (26) angeordnet ist.

3. Befestigungssystem nach Anspruch 1 oder 2,
**dadurch gekennzeichnet,**
**dass** das Drückstück (20) ein Koppelstück (25) aufweist, das im Bereich seiner Innenkontur über das Verbindungselement (26) an den radial außenliegenden Bereich des Dübelschaftes (11) angekoppelt ist,
wobei das Koppelstück (25) radial außen über den Dübelschaft (11) im Anschlussbereich vorsteht.

4. Befestigungssystem nach einem der Ansprüche 1 bis 3,
**dadurch gekennzeichnet,**
**dass** das Druckstück (20) derart ausgebildet ist, das es bei abgerissenem Verbindungselement mit seiner Abrisskante über eine Gleitzone (14) des Dübelschaftes (11) gleitet,
wobei sich die Gleitzone (14) an die Abrisskante des Dübelschaftes (11) anschließt.

5. Befestigungssystem nach Anspruch 4,
**dadurch gekennzeichnet,**
**dass** sich der Querschnitt der Gleitzone (14) im Anschluss an die Abrisskante kontinuierlich im Querschnitt vergrößert, insbesondere stumpfkegelförmig ausgebildet ist.

6. Befestigungssystem nach einem der Ansprüche 1 bis 5,
**dadurch gekennzeichnet,**
**dass** das Druckstück (20) einen, insbesondere tellerförmigen Kopf (21) aufweist, der an seiner Unterseite rippenförmig vorstehende Vorsprünge (23) aufweist.

7. Befestigungssystem nach einem der Ansprüche 1 bis 6,
**dadurch gekennzeichnet,**
**dass** der tellerförmige Kopf (21) des Druckstücks (20) mit einem oder mehreren Durchbrüchen und/oder Ausnehmungen versehen ist.

8. Befestigungssystem nach einem der Ansprüche 1 bis 7,
**dadurch gekennzeichnet,**
**dass** der Dübelschaft (11) eine Spreizzone (12) aufweist, dass im Bereich der Spreizzone Längsschlitze (12.1) eingebracht sind,
wobei wenigstens zwei der Längsschlitze (12.1) in Richtung der Mittellängsachse des Dübelschaftes (11) zueinander versetzt angeordnet sind und dass im Bereich zwischen den Längsschlitzen (12.1) ein oder mehrere Verformungsabschnitte (12.2) angeordnet ist/sind.

9. Befestigungssystem nach Anspruch 8,
**dadurch gekennzeichnet,**
**dass** der oder die Verformungsabschnitte (12.2) von Flächenbereichen des Dübelschaftes (11) gebildet ist/sind, deren Erstreckung in Richtung der Mittellängsachse des Dübelschaftes (11) um ein mehrfaches größer ist als deren Dimensionierung in Umfangsrichtung des Dübelschaftes (11).

## Claims

1. Fastening system for mounting insulating elements (40), comprising an expansion nail (30) and a dowel (10),
wherein the expansion nail (30) comprises an expansion nail head (31) and an expansion nail shank (33),
and wherein the dowel (10) comprises a dowel shank (11) and a connected thrust piece (20),
**characterized in that,**
the thrust piece (20) is integrally connected with the dowel shank (11) by means of a peripherally formed connecting element (26),
wherein the connecting element (26) is so designed
that it breaks off circumferentially upon introducing the expansion nail (30) into the dowel shank (11).

2. Fastening system according to claim 1,
**characterized in that,**
the dowel shank (11) passes via a shoulder (14.1) into a dowel section (14.2) at its end facing the thrust piece (20), wherein the dowel section (14.2) has a smaller cross-section than the dowel shank (11),
and that the connecting element (26) is arranged in the region of the shoulder (14.1).

3. Fastening system according to claim 1 or 2,
**characterized in that,**
the thrust piece (20) comprises a coupling piece (25) which is coupled to the radially outer region of the plug shank (11) in the region of its inner contour through the connecting element (26),
wherein the coupling piece (25) protrudes radially outwards into the connection region via the dowel shank (11).

4. Fastening system according to one of the claims 1 to 3, **characterized in that,**
the thrust piece (20) is so formed that in the event of a broken connecting element, it slides with its tear-off edge via a sliding zone (14) of the dowel shank (11),
wherein the sliding zone (14) connects to the tear-off edge of the dowel shank (11).

5. Fastening system according to claim 4,
**characterized in that,**
the cross-section of the sliding zone (14) increases continuously in cross-section in the connection to the tear-off edge, in particular, it is frustoconical in shape.

6. Fastening system according to one of the claims 1 to 5, **characterized in that**,
the thrust piece (20) comprises an, in particular, disc-shaped head (21) having rib-shaped protruding projections (23) on its underside.

7. Fastening system according to one of the claims 1 to 6, **characterized in that,**
the disc-shaped head (21) of the thrust piece (20) is provided with one or more apertures and/or recesses.

8. Fastening system according to one of the claims 1 to 7, **characterized in that,**
the dowel shank (11) comprises an expansion zone (12), wherein longitudinal slots (12.1) are provided in the region of the expansion zone,
wherein at least two of the longitudinal slots (12.1) are arranged offset from one another in the direction of the mean longitudinal axis of the dowel shank (11), and that one or more deformation sections (12.2) are arranged in the region between the longitudinal slots (12.1).

9. Fastening system according to claim 8,
**characterized in that,**
the deformation section(s) (12.2) is/are formed from the surface areas of the dowel shank (11), whose extension is several times greater in the direction of the mean longitudinal axis of the dowel shank (11) than its dimensioning in the peripheral direction of the dowel shank (11).

## Revendications

1. Système de fixation pour le montage d'éléments isolants (40), comprenant un clou à expansion (30) et une cheville (10),
le clou à expansion (30) comprenant une tête de clou à expansion (31) et une tige de clou à expansion (33),
et la cheville (10) comprenant une tige de cheville (11) et un élément de compression (20) qui est reliée à celle-ci,
**caractérisé en ce que**
l'élément de compression (20) est relié, au moyen d'un élément de liaison (26) conçu de manière circulaire d'une seule pièce avec la tige de cheville (11),
l'élément de liaison (26) étant conçu de façon à ce qu'il se déchire de manière circulaire lors de l'insertion du clou à expansion (30) dans la tige de cheville (11).

2. Système de fixation selon la revendication 1,
**caractérisé en ce que**
la tige de cheville (11) passe, au niveau de son extrémité orientée vers l'élément de compression (20), d'un épaulement (14.1) vers un élément de cheville (14.2), **en ce que** l'élément de cheville (14.2) présente une section transversale inférieure à la tige de cheville (11) et **en ce que** l'élément de liaison (26) est disposé au niveau de l'épaulement (14.1).

3. Système de fixation selon la revendication 1 ou 2,
**caractérisé en ce que**
l'élément de compression (20) comprend un élément de couplage (25) qui est couplé, au niveau de son contour interne, par l'intermédiaire de l'élément de liaison (26), à la zone radiale externe de la tige de cheville (11),
l'élément de couplage (25) dépassant radialement vers l'extérieur de la tige de cheville (11) dans la zone de raccordement.

4. Système de fixation selon l'une des revendications 1 à 3,
**caractérisé en ce que**
l'élément de compression (20) est conçu de façon à ce qu'il glisse, lorsque l'élément de liaison est déchiré, avec son arête de déchirure, sur une zone de glissement (14) de la tige de cheville (11),
la zone de glissement (14) prolongeant l'arête de déchirure de la tige de cheville (11).

5. Système de fixation selon la revendication 4,
**caractérisé en ce que**
la section transversale de la zone de glissement (14) s'agrandit après l'arête de déchirure de manière continue, plus particulièrement sous une forme tronconique.

6. Système de fixation selon l'une des revendications 1 à 5,
**caractérisé en ce que**
l'élément de compression (20) comprend une tête (21), plus particulièrement de forme plate, qui comprend, au niveau de son côté inférieur, des saillies (23) dépassant sous la forme de nervures.

7. Système de fixation selon l'une des revendications 1 à 6,
**caractérisé en ce que**
la tête de forme plate (21) de l'élément de compression (20) est munie d'un ou plusieurs passages et/ou évidements.

8. Système de fixation selon l'une des revendications 1 à 7,
**caractérisé en ce que**
la tige de cheville (11) comprend une zone d'expansion (12), **en ce que**, au niveau de la zone d'expansion, se trouvent des fentes longitudinales (12.1),
au moins deux des fentes longitudinales (12.1) étant disposées de manière décalée entre elles en direction de l'axe longitudinal central de la tige de cheville (11) et **en ce que**, dans la zone entre les fentes longitudinales (12.1), est/sont disposée(s) une ou plusieurs portion(s) de déformation (12.2).

9. Système de fixation selon la revendication 8,
**caractérisé en ce que**
la ou les portion(s )de déformation (12.2) est/sont constituée(s) de zones de surface de la tige de cheville (11), dont l'extension en direction de l'axe longitudinal central de la tige de cheville (11) est plusieurs fois supérieure à son dimensionnement dans la direction de la circonférence de la tige de cheville (11).
